# FASCICULE DE BREVET EUROPEEN

(11) **EP 4 214 097 B1**
(45) Date de publication et mention de la délivrance du brevet: **12.03.2025**
(21) Numéro de dépôt: 21777523.8
(22) Date de dépôt: 15.09.2021
(51) Int. Cl.: B60S 1/40

(54) **ADAPTATEUR POUR SYSTEME D'ESSUYAGE D'UN VEHICULE AUTOMOBILE**
ADAPTER FÜR EINE KRAFTFAHRZEUGWISCHERANLAGE
ADAPTER FOR A MOTOR VEHICLE WIPER SYSTEM

(30) Priorité: 17.09.2020 FR 2009449
(43) Date de publication de la demande: 26.07.2023
(73) Titulaire: Valeo Systèmes d'Essuyage, 78322 le Mesnil Saint Denis (FR)
(72) Inventeur: GAUCHER, Vincent, 78321 LE MESNIL SAINT DENIS (FR); POTON, Eric, 78321 LE MESNIL SAINT DENIS (FR); JOMARD, Olivier, 78321 LE MESNIL SAINT DENIS (FR)
(74) Mandataire: Valeo Visibility
(86) Numéro de dépôt international: PCT/EP2021/075332
(87) Numéro de publication internationale: WO 2022/058348

(56) Documents cités:
- EP-A1- 3 165 417
- EP-A2- 2 617 613
- WO-A1-2005/097570
- DE-A1- 2 604 325
- FR-A1- 2 507 137
- FR-A1- 2 584 036

## Description

La présente invention se rapporte au domaine des systèmes d'essuyage pour véhicules automobiles et concerne, plus particulièrement, les systèmes d'essuyage comprenant un balai d'essuyage, un bras d'entraînement de ce balai et un dispositif de connexion destiné à relier mécaniquement le balai d'essuyage au bras d'entraînement.

Les systèmes d'essuyage pour véhicules automobiles sont conçus pour retirer, par balayage, les liquides et salissures qui peuvent perturber la vision que le conducteur a de son environnement. Ces systèmes d'essuyage comprennent généralement un bras d'entraînement qui effectue un mouvement de va-et-vient angulaire, et un ou des balai(s) d'essuyage allongés équipés de lames racleuses réalisées dans un matériau élastique. En frottant contre une surface vitrée, ces lames en balaient l'eau ou le liquide de nettoyage et un certain nombre de salissures, et les évacuent en dehors du champ de vision du conducteur.

Quelle que soit la configuration du balai d'essuyage, celui-ci est rattaché au bras d'entraînement par un dispositif de connexion. On connaît des dispositifs de connexion comportant au moins un connecteur et un adaptateur dans lesquels le connecteur est solidarisé au balai d'essuyage et l'adaptateur est un composant qui est configuré, d'une part, pour coopérer avec le connecteur et, d'autre part, pour être engagé avec une portion terminale du bras d'entraînement. Connecteur et adaptateur coopèrent, notamment par l'intermédiaire d'une liaison pivot, pour réaliser la fixation du balai sur le bras d'entraînement et la liaison articulée entre ces deux ensembles.

Les véhicules peuvent être équipés de plusieurs types de systèmes d'essuyage, qui diffèrent les uns des autres notamment par la forme de la portion terminale du bras d'entraînement destinée à être solidaire de l'adaptateur, et donc par la forme de l'adaptateur correspondant. Dans ce contexte, dans le domaine de l'après-vente, également connu sous le terme de marché de la seconde monte, il est visé de proposer un balai d'essuyage standard, vendu équipé de son propre connecteur, destiné à coopérer avec plusieurs types de bras d'essuie-glaces.

Parmi ces variétés de bras d'entraînement, on connaît en particulier celles du type **connu sous** la dénomination anglo-saxonne "side-lock". Dans de tels bras d'entraînement, la portion terminale comporte un pion et une patte sensiblement en forme de « L » qui s'étendent transversalement à une direction principale d'extension du bras d'entraînement. Le pion traverse l'adaptateur et le connecteur et forme un axe de pivotement commun au bras d'entraînement et au balai d'essuyage, et la patte sécurise la liaison mécanique entre le bras d'entraînement et le balai d'essuyage, en bloquant au moins le mouvement de l'adaptateur par rapport au bras d'entraînement le long de la direction transversale, c'est-à-dire dans l'axe d'extension du pion. Un inconvénient de tels systèmes d'essuyage réside dans la complexité d'ajustement des dimensions des différents composants, notamment de la patte du bras d'entraînement et de l'adaptateur, de sorte à prévenir les mouvements du balai d'essuyage le long de la direction transversale.

Dans le contexte précédemment évoqué de l'après-vente, il est connu de vendre le balai d'essuyage standard et son connecteur avec une pluralité d'adaptateurs respectivement configurés pour coopérer avec le connecteur standard et avec l'un des bras d'entraînement spécifique. Une telle offre peut repousser les utilisateurs car cela implique l'achat d'adaptateurs dont ils n'ont pas besoin.

Les équipementiers visent ainsi à proposer des balais d'essuyage standard équipés d'un connecteur standard et accompagnés par ailleurs d'un nombre réduit d'adaptateurs, et si possible d'un adaptateur standard, qui s'adapte à une pluralité de types de bras d'entraînement, et notamment des bras de type « side-lock ». D'autres adaptateurs sont décrits dans les documents suivants : FR2584036, FR2507137 and EP3165417.

La présente invention s'inscrit dans ce contexte et propose une alternative aux systèmes d'essuyage classiques permettant de réaliser une connexion mécanique fiable, durable et peu coûteuse entre connecteur et adaptateur respectivement d'un balai d'essuyage et d'un bras d'entraînement, notamment de bras d'entraînement du type connu sous l'appellation « side-lock ». L'invention est définie par la revendication 1.

Dans ce but, l'invention propose un adaptateur d'un dispositif de connexion configuré pour connecter un balai d'essuyage à un bras d'entraînement dans un système d'essuyage pour véhicule automobile, comprenant une première paroi latérale et une deuxième paroi latérale distantes l'une de l'autre et reliées entre elles par une paroi supérieure, la première paroi latérale et la deuxième paroi latérale comprenant respectivement un premier orifice et un deuxième orifice aptes à recevoir un pion s'étendant selon le long d'une direction transversale en saillie du bras d'entraînement.

La deuxième paroi latérale comprend au moins un moyen de fixation du pion dans le deuxième orifice configuré pour maintenir l'adaptateur solidaire du bras d'entraînement au moins le long de la direction transversale.

Le premier orifice, disposé dans la première paroi latérale, a au moins une fonction de guidage du pion du bras d'entraînement au travers de l'adaptateur, et notamment au travers du volume interne de l'adaptateur.

Les moyens de fixation portés par la deuxième paroi latérale permettent d'assurer la position transversale du pion dans le deuxième orifice et donc d'assurer le blocage dudit adaptateur par rapport au bras d'entraînement au moins le long de la direction transversale, c'est-à-dire dans les deux sens de déplacement définis par ladite direction transversale, de sorte à fiabiliser la fixation transversale de l'adaptateur par rapport au bras d'entraînement.

En d'autres termes, la deuxième paroi latérale comporte des moyens de fixation agencés au niveau du deuxième orifice, en bordure de celui-ci et/ou à l'intérieur de celui-ci de sorte à bloquer le mouvement transversal du pion solidaire du bras d'entraînement dans le deuxième orifice formé dans l'adaptateur.

De la sorte, l'adaptateur, et par extension le dispositif de connexion du système d'essuyage, peut être appliqué à une grande variété de bras d'entrainement, indépendamment de la dimension de moyens de fixation formés en saillie du bras d'entraînement et associés au pion, étant entendu que la dimension longitudinale de ces moyens de fixation peut varier d'un bras d'entraînement à l'autre.

De manière avantageuse, le deuxième orifice peut également être configuré pour maintenir l'adaptateur solidaire du bras d'entraînement le long de la direction longitudinale et/ou le long d'une direction verticale, orthogonale à la direction transversale et à la direction longitudinale.

Selon une caractéristique de la présente invention, l'au moins un moyen de fixation est déformable élastiquement. Par « déformable élastiquement » on entend que le moyen de fixation est configuré pour pouvoir se déformer au passage du pion dans le deuxième orifice et générer un effort de rappel élastique tendant à le ramener dans sa position d'origine, cet effort de rappel élastique permettant de figer la position de l'adaptateur par rapport au pion.

Notamment, l'adaptateur peut être est au moins en partie réalisé dans un matériau polymère présentant des propriétés plus ou moins élastiques, par exemple un polymère thermoplastique, tel que du polyoxyméthylène ou du PBT chargé (Polytéréphtalate de butylène).

Selon une caractéristique optionnelle de l'invention, le deuxième orifice est un trou traversant s'étendant entre une face interne de la deuxième paroi latérale, tournée vers un volume interne de l'adaptateur, et une face externe, opposée à la face interne, de la deuxième paroi latérale.

Selon une caractéristique non revendiquée, le deuxième orifice est un trou borgne s'étendant depuis une face interne, tournée vers un volume interne de l'adaptateur, de la deuxième paroi latérale et présentant une paroi de fond s'étendant à une distance non nulle d'une face externe, opposée à la face interne, de la deuxième paroi latérale.

Selon une caractéristique non revendiquée, l'au moins un moyen de fixation peut consister en un tronçon d'étranglement du deuxième orifice, le deuxième orifice présentant une forme sensiblement tronconique et étant défini par au moins une première dimension principale du deuxième orifice et une deuxième dimension principale du tronçon d'étranglement, respectivement mesurées au niveau d'une face interne et d'une face externe de la deuxième paroi latérale, la première dimension principale étant supérieure à la deuxième dimension principale.

Particulièrement, le deuxième orifice peut présenter une section circulaire, on entend alors par première dimension principale et deuxième dimension principale des diamètres de la forme tronconique du deuxième orifice au travers de la deuxième paroi latérale.

De manière additionnelle, le premier orifice, présentant par exemple une forme cylindrique, peut être caractérisé par une dimension principale primaire sensiblement égale à la première dimension principale du deuxième orifice. Lorsque le premier orifice est de section circulaire, on entend par dimension principale primaire un diamètre. Lorsque le premier orifice est de section polygonale, on entend par dimension principale primaire une diagonale la plus longue de la section.

Selon une caractéristique non revendiquée, l'au moins un moyen de fixation peut comprendre au moins une languette souple s'étendant en travers du deuxième orifice, en formant une saillie radiale du bord délimitant le deuxième orifice. Par « languette » on entend une structure sensiblement allongée, par exemple parallélépipédique, dont une extrémité libre peut converger vers un axe du deuxième orifice, par exemple l'axe de rotation d'un connecteur associé à l'adaptateur pour former le dispositif de connexion, sur lequel le deuxième orifice peut être centré. Notamment, de telles languettes sont configurées pour être, au moins en partie, en contact avec le pion lorsque celui-ci est inséré dans le deuxième orifice.

Selon l'invention, l'au moins un moyen de fixation consiste en un anneau de serrage élastique réalisé dans la matière de la deuxième paroi latérale, ledit anneau de serrage élastique s'étendant au moins en partie dans une face externe de la deuxième paroi latérale.

Selon une caractéristique optionnelle de l'invention, l'anneau de serrage élastique formant le moyen de fixation est délimité radialement, autour du bord délimitant le deuxième orifice, par une gorge qui définit au moins une lamelle agencée entre cette gorge et le bord délimitant le deuxième orifice. Au moins une encoche peut être agencée radialement en d'une lamelle, de sorte que chaque lamelle est séparée d'une lamelle voisine par une encoche, chaque encoche s'étendant radialement depuis le bord délimitant le deuxième orifice jusqu'à la gorge. Par « encoche » on entend une structure s'étendant en creux d'un plan externe dans lequel s'inscrit essentiellement la face externe de la deuxième paroi latérale.

Selon une caractéristique de l'invention, la deuxième paroi latérale peut comprendre une pluralité de moyens de fixation. A titre d'exemple, il est envisageable d'avoir un deuxième orifice configuré de sorte que l'enveloppe le délimitant présente une forme tronconique et qu'un premier moyen de fixation soit ainsi formé par une portion d'étranglement tel que précédemment évoqué, et d'avoir dans le même temps un deuxième moyen de fixation formé par une languette agencée en saillie radiale à l'intérieur de l'enveloppe délimitant le deuxième orifice et/ou un troisième moyen de fixation formé dans une face externe de la deuxième paroi latérale, en bordure du deuxième orifice débouchant sur cette deuxième paroi latérale, par exemple sous la **forme d'encoche(s).**

Selon un premier mode de réalisation du système d'essuyage, l'adaptateur peut former un ensemble monobloc. On entend par « monobloc » le fait que l'adaptateur comprenne une unique pièce et que les parois latérales ou la paroi supérieure ne peuvent être désolidarisées les unes des autres sans entraîner la dégradation ou la destruction au moins partielle de l'adaptateur.

Selon un deuxième mode de réalisation, l'adaptateur comprend au moins un élément primaire et un élément secondaire, l'élément secondaire étant rapporté sur l'élément primaire et disposé en prise de celui-ci :
l'élément primaire comprenant une première paroi latérale primaire et une deuxième paroi latérale primaire distantes l'une de l'autre et reliées entre elles par une paroi supérieure primaire ;
l'élément secondaire comprenant une première paroi latérale secondaire et une deuxième paroi latérale secondaire distantes l'une de l'autre et reliées entre elles par une paroi supérieure secondaire ;
la première paroi latérale de l'adaptateur comprenant au moins la première paroi latérale primaire et la première paroi latérale secondaire et la deuxième paroi latérale de l'adaptateur comprenant au moins la deuxième paroi latérale primaire et la deuxième paroi latérale secondaire.

Selon une caractéristique d'un tel mode de réalisation, l'élément secondaire de l'adaptateur comprend l'au moins un moyen de fixation et entoure au moins en partie l'élément primaire.

En d'autres termes, l'élément secondaire de l'adaptateur comprend la face externe de la deuxième paroi latérale et la face externe de la première paroi latérale tandis que l'élément primaire comprend la face interne de ces mêmes parois latérales.

Un tel mode de réalisation permet notamment de réaliser l'élément primaire et l'élément secondaire dans des matériaux différents, par exemple de sorte à utiliser un matériau présentant des propriétés élastiques pour la réalisation de l'élément comprenant le moyen de fixation, en l'espèce le deuxième élément.

Selon une caractéristique optionnelle du présent mode de réalisation, l'élément primaire comprend au moins un organe de blocage et l'élément secondaire comprend **au moins un** moyen complémentaire de blocage, configuré pour coopérer avec au moins l'organe de blocage, l'organe de blocage et le moyen complémentaire de blocage étant au moins configurés pour bloquer l'élément secondaire le long de la direction longitudinale. A titre d'exemple, au moins l'organe de blocage et/ou le moyen complémentaire de blocage peut consister en des nervures et rainures de formes et dimensions complémentaires.

Selon une caractéristique optionnelle du présent mode de réalisation, le moyen complémentaire de blocage peut s'étendre symétriquement de part et d'autre d'un plan médian, orthogonal à l'axe longitudinal, de l'élément secondaire.

Selon une caractéristique optionnelle du présent mode de réalisation, l'élément secondaire peut comprendre une pluralité de moyens complémentaires de blocage, au moins un premier moyen complémentaire de blocage et un deuxième moyen complémentaire de blocage étant disposés symétriquement l'un à l'autre par rapport à un plan médian, orthogonal à l'axe longitudinal, de l'élément secondaire.

De tels agencements du ou des moyens complémentaires de blocage confèrent à l'élément secondaire de l'adaptateur un caractère réversible permettant son utilisation dans des systèmes d'essuyage dont le bras d'entraînement s'étend à l'opposé de la position telle que précédemment exposée par rapport à l'adaptateur, c'est-à-dire dans une position où c'est cette fois la deuxième paroi latérale primaire de l'élément primaire qui est en regard du flanc du bras d'entrainement porteur de la patte. On entend ainsi par « réversible » le fait que l'élément secondaire peut être dissocié de l'élément primaire, pivoté à 180° autour de la direction verticale puis réassemblé sur l'élément primaire.

Selon une caractéristique optionnelle de l'invention, indépendante du mode de réalisation mis en œuvre, l'adaptateur peut comprendre au moins un bord extrême configuré pour recouvrir au moins partiellement une extrémité longitudinale du dispositif de connexion le long de l'axe longitudinal de sorte, notamment, à prévenir l'accumulation de particules et débris dans le dispositif de connexion, par exemple au niveau de l'articulation d'un connecteur du dispositif de connexion sur le balai d'essuyage.

Notamment, lorsque l'adaptateur est réalisé selon le deuxième mode de réalisation, l'élément primaire et/ou l'élément secondaire peut former un tel bord extrême. **Avantageusement,** un tel bord extrême peut comprend au moins une entaille de passage du balai d'essuyage, par exemple d'un déflecteur du balai d'essuyage.

L'invention concerne également un dispositif de connexion configuré pour connecter un balai d'essuyage à un bras d'entraînement dans un système d'essuyage pour véhicule automobile, le dispositif de connexion comprenant au moins un connecteur, configuré pour être rendu solidaire du balai d'essuyage et comprenant au moins un trou transversal apte à recevoir le pion, et un adaptateur tel qu'il vient d'être évoqué et monté pivotant autour d'un axe de rotation sur le connecteur pour relier le connecteur au bras d'entraînement.

L'invention concerne par ailleurs un système d'essuyage pour véhicule automobile comprenant un balai d'essuyage, un bras d'entraînement et un tel dispositif de connexion, le bras d'entraînement comprenant au moins un pion et une patte s'étendant tous deux le long d'une direction transversale en saillie d'une portion terminale du bras d'entraînement.

Conformément à ce qui a pu être précédemment évoqué, l'adaptateur, et par extension le dispositif de connexion du système d'essuyage, peut être appliqué à une grande variété de bras d'entrainement, qui diffèrent les uns des autres notamment par la dimension transversale de leur patte et qui ne peuvent donc pas tous permettre un blocage transversal d'un même adaptateur, de taille standard, par butée d'une face latérale de l'adaptateur contre une surface interne de la patte. La présente invention est ainsi particulièrement configurée de sorte à assurer un tel blocage transversal par l'intermédiaire de la coopération entre le pion et la deuxième paroi latérale et/ou le deuxième orifice de l'adaptateur, autrement dit indépendamment de la dimension de la patte, et propose ainsi une alternative pour la fiabilisation de la solidarisation de l'adaptateur sur le bras d'entraînement pouvant être adaptée à différents bras d'entraînement de type « side-lock » de dimensions variables.

Au sein de l'adaptateur, le premier orifice et/ou le deuxième orifice peut s'étendre au moins en partie en regard du trou transversal du connecteur.

Le connecteur peut notamment présenter une embase rendue solidaire du balai et un muret agencé en saillie de l'embase, à l'opposé du balai. Et l'adaptateur et le connecteur peuvent notamment être agencés l'un par rapport à l'autre de sorte que les parois latérales de l'adaptateur définissent un logement configuré pour recevoir le muret du connecteur, les parois latérales de l'adaptateur étant disposés de part et d'autre du muret. Des moyens de pivotement de l'adaptateur par rapport au connecteur sont respectivement portés par le muret et les parois latérales.

Selon une caractéristique de l'invention, la portion terminale du bras d'entraînement comprend au moins un premier flanc et un deuxième flanc, au moins le deuxième flanc portant le pion et le deuxième flanc étant au moins en partie en appui contre une face externe de la première paroi de l'adaptateur.

En d'autres termes, dans la présente invention, la paroi latérale de l'adaptateur, en l'espèce la deuxième paroi latérale, la plus éloignée du bras d'entraînement, notamment du deuxième flanc, comporte le moyen de fixation configuré pour bloquer transversalement l'adaptateur.

A l'inverse, dans la première paroi latérale, le premier orifice peut présenter une forme quelconque, par exemple une forme sensiblement cylindrique de section circulaire ou polygonale et peut ou non être au moins en partie en contact avec le pion.

Selon une caractéristique de l'invention, la patte comprend au moins un rebord extrême de butée de l'adaptateur s'étendant en regard de la deuxième paroi latérale de l'adaptateur.

De manière particulière, la patte est définie par une dimension transversale, mesurée entre le deuxième flanc et une surface interne du rebord extrême, la dimension transversale étant strictement supérieure à une dimension transversale correspondante de l'adaptateur, mesurée entre la face externe de la première paroi latérale et la face externe de la deuxième paroi latérale, la surface interne du rebord extrême s'étendant à distance non nulle de la face externe de la deuxième paroi latérale de l'adaptateur.

L'invention concerne également un véhicule automobile comprenant système d'essuyage tel que précédemment exposé.

D'autres caractéristiques détails et avantages ressortiront plus clairement à la lecture de la description détaillée donnée ci-après à titre indicatif en relation avec les différents exemples de réalisation illustrés sur les figures suivantes :
[Fig 1] est une représentation schématique générale d'un système d'essuyage selon l'invention comprenant un bras d'entraînement et plus particulièrement une portion terminale de ce bras, ainsi qu'un dispositif de connexion et un balai d'essuyage ;
[Fig 2] est une représentation éclatée de la portion terminale du bras d'entraînement et du dispositif de connexion du système d'essuyage selon l'invention, rendant visible un adaptateur, ici selon un premier mode de réalisation, et un connecteur ;
[Fig 3] est une coupe transversale du bras d'entrainement et du dispositif de connexion comprenant un adaptateur réalisé selon le premier mode de réalisation
[Fig 4] est une vue en perspective de l'invention
[Fig 5] est une représentation simplifiée d'une vue de dessous de l'adaptateur du dispositif de connexion tel qu'illustré aux figures 2 ou 3 ;
[Fig 6] est une coupe transversale d'un adaptateur tel qu'illustré aux figures 2 à 5, rendant visible un premier exemple non revendiqué de moyen de fixation ;
[Fig 7] est une coupe transversale de l'adaptateur tel qu'illustré aux figures 2 à 6 lorsqu'il comprend un deuxième exemple non revendiqué de moyen de fixation;
[Fig 8] est une vue en coupe similaire à celle de la figure 7, illustrant une variante du deuxième exemple non revendiqué de moyen de fixation ;
[Fig 9] est une représentation en perspective détaillant plus précisément l'adaptateur des figures 2 à 5, avec le premier exemple de moyen de fixation ;
[Fig 10] est une représentation en perspective, similaire à celle de la figure 9, illustrant un troisième exemple non revendiqué de moyen de fixation ;
[Fig 11] est une vue éclatée en perspective de l'adaptateur lorsque celui-ci est réalisé selon un deuxième mode de réalisation, l'adaptateur comprenant un élément primaire et un élément secondaire, cet adaptateur comprenant un premier exemple de moyen de fixation ;
[Fig 12] est une vue en perspective de l'adaptateur selon le deuxième mode de réalisation lorsque celui-ci est assemblé ;
[Fig 13] est une représentation simplifiée d'une vue de dessous de l'adaptateur du dispositif selon le deuxième mode de réalisation ;
[Fig 14] est une coupe transversale d'un bras d'entrainement et d'un dispositif de connexion comprenant l'adaptateur selon le deuxième mode de réalisation ;
[Fig 15] est une coupe transversale de l'adaptateur selon le deuxième mode de réalisation ;
[Fig 16] est une vue en perspective d'une alternative de l'adaptateur selon le deuxième mode de réalisation lorsque celui-ci est assemblé ;
[Fig 17] est une vue en perspective d'un exemple particulier de réalisation de l'élément secondaire d'un adaptateur tel qu'illustré à la figure 16.

Il faut tout d'abord noter que les figures exposent l'invention de manière détaillée pour mettre en œuvre l'invention, lesdites figures pouvant bien entendu servir à mieux définir l'invention, le cas échéant.

Les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

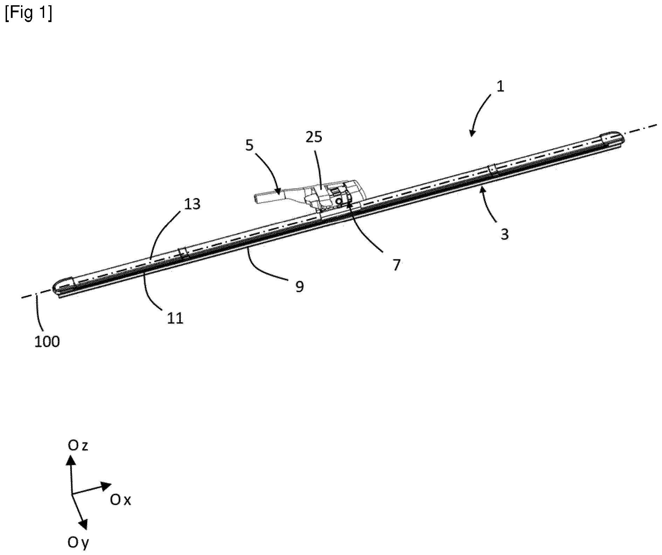

Tel qu'illustré à la figure 1, l'invention concerne un système d'essuyage 1 pour véhicule automobile comprenant un balai d'essuyage 3, un bras d'entraînement 5 et un dispositif de connexion 7.

Le balai d'essuyage 3 est articulé et configuré pour se déplacer contre une surface vitrée du véhicule automobile, par exemple un pare-brise. Le balai d'essuyage 3 s'étend principalement le long d'une direction longitudinale Ox et comprend au moins une lame 9 racleuse souple, par exemple réalisée dans un matériau élastomère, configurée pour être en contact avec la surface vitrée du véhicule automobile, et un ensemble de rigidification 11 coopérant avec la lame et pouvant consister, à titre d'exemple non exhaustif, en une ou plusieurs vertèbres métalliques. Additionnellement, le balai d'essuyage 3 peut comprendre au moins un déflecteur 13 aérodynamique.

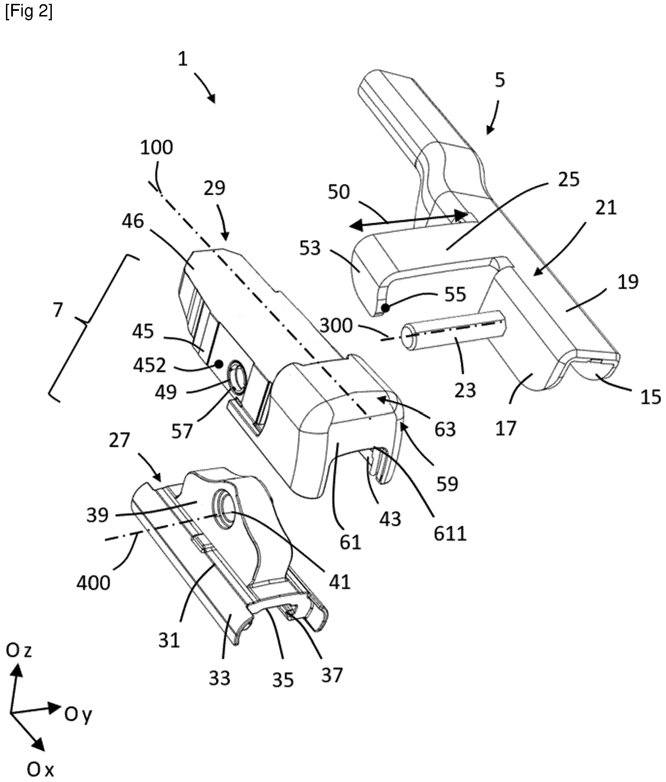

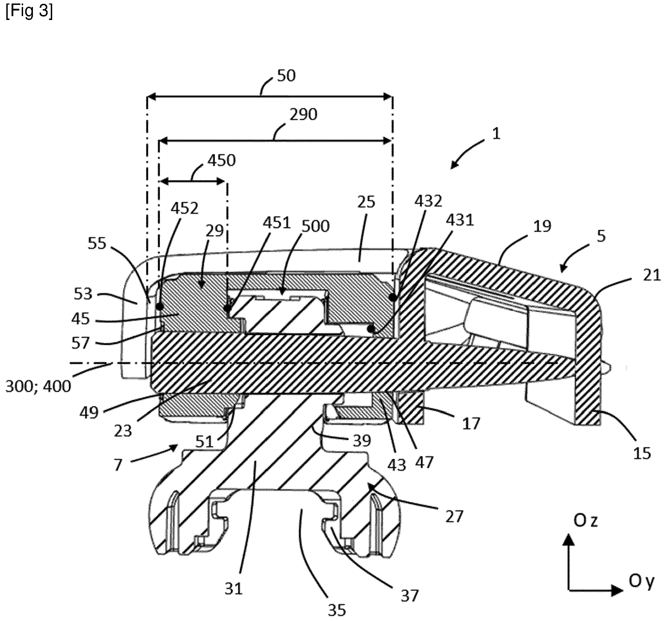

Le dispositif de connexion 7 est agencé entre le balai d'essuyage et le bras d'entraînement, ici au niveau d'une zone centrale du balai d'essuyage 3, de sorte à relier le balai d'essuyage de manière pivotante au bras d'entraînement 5, tel que cela va être maintenant détaillé en référence aux figures 2 et 3.

Le bras d'entraînement 5 s'étend sensiblement selon la direction longitudinale Ox précédemment décrite et comprend une première extrémité, ici non représentée, reliée à un mécanisme d'entraînement et une portion terminale 21 à l'opposée de la première extrémité et qui coopère avec le dispositif de connexion 7. Cette portion terminale 21 présente une structure en « U » renversé, un premier flanc 15 et un deuxième flanc 17 formant des branches du « U » tandis qu'un flanc supérieur 19, reliant le premier flanc 15 et le deuxième flanc 17 entre eux, en forme la base. De manière particulière, le premier flanc 15 et le deuxième flanc 17 s'étendent au moins en partie parallèlement l'un à l'autre.

La portion terminale 21 du bras d'entraînement 5 comprend au moins un pion 23 et une patte 25 qui s'étendent tous deux le long d'une direction transversale Oy, orthogonale à la direction longitudinale Ox, en saillie de ladite portion terminale 21. Un tel bras d'entraînement 5 est notamment connu sous la dénomination anglo-saxonne "side-lock", le pion 23 étant configuré pour assurer la liaison mécanique, en rotation, du dispositif de connexion 7 sur le bras d'entraînement 5 autour d'un axe de pivotement 300 sur lequel est centré le pion 23.

Le dispositif de connexion 7 comprend au moins un connecteur 27 et un adaptateur 29. Le connecteur 27 est configuré pour être monté solidaire du balai d'essuyage 3. Il assure une liaison mécanique dite complète, c'est-à-dire fixe en rotation et translation, avec le balai d'essuyage 3, de sorte qu'une fois monté sur celui-ci, le connecteur ne présente aucun degré de liberté par rapport au balai.

Le connecteur 27 comporte une embase 31 qui s'étend principalement selon la direction d'extension du balai d'essuyage 3, en l'espèce la direction longitudinale Ox, et qui comprend une zone de solidarisation 33 du connecteur 27 sur le balai d'essuyage 3 prenant, à titre d'exemple, la forme d'une ou plusieurs saignées 35 longitudinales ménagées en partie inférieure de l'embase 31 et participant à définir au moins une griffe 37 apte à venir en prise sur le balai d'essuyage 3, et à titre d'exemple sur les vertèbres de rigidification lorsque celles-ci dépassent latéralement de la lame. L'embase 31 est surmontée d'au moins un muret 39 sensiblement vertical issu de matière avec l'embase 31 et percé d'un trou transversal 41 traversant, de section circulaire et centré sur un axe de rotation 400 qui est confondu, une fois le balai et son connecteur 27 montés sur le bras, avec l'axe de pivotement 300 du pion 23 précédemment décrit.

L'adaptateur 29 est monté pivotant autour de l'axe de rotation 400 sur le connecteur 27 et relie le connecteur 27 au bras d'entraînement 5. L'adaptateur 29 présente une structure globalement parallélépipédique pouvant, à titre d'exemple non exhaustif, être sensiblement allongée le long de la direction longitudinale Ox définie par le balai d'essuyage 3. L'adaptateur 29 comprend une première paroi latérale 43 et une deuxième paroi latérale 45 distantes l'une de l'autre. Celles-ci sont reliées entre elles par une paroi supérieure 46 qui s'étend le long d'un axe longitudinal 100 sensiblement parallèle à la direction longitudinale Ox. Particulièrement, la première paroi latérale 43 et la deuxième paroi latérale 45 peuvent s'étendre parallèlement l'une à l'autre. L'adaptateur présente ainsi en son sein une forme creuse formant logement de réception pour le muret du connecteur.

Par convention, dans tout le présent document, le qualificatif « longitudinal » s'applique à l'orientation principale du balai d'essuyage 3 ou de la paroi supérieure 46 de l'adaptateur 29, le qualificatif « transversal » s'applique à une direction sensiblement perpendiculaire à la direction longitudinale et définie par la direction principale d'extension du pion 23 du bras d'entraînement 5, et le qualificatif « vertical » désigne la direction perpendiculaire à la fois à la direction longitudinale et à la direction transversale. Dans chacune des figures le nécessitant, la direction longitudinale sera représentée par l'axe Ox tandis que les axes Oz et Oy représenteront respectivement les directions verticale et transversale. Ces axes définissent ensemble un repère Oxyz dans lequel les qualificatifs « haut » ou « supérieur » seront représentés par le sens positif de l'axe Oy, les qualificatifs « bas » ou « inférieur » étant représentés par le sens négatif de ce même axe Oy.

Dans un premier mode de réalisation du système d'essuyage 1, l'adaptateur 29 est un ensemble monobloc. En d'autres termes, cet adaptateur est formé d'une unique pièce et les parois latérales 43, 45 et/ou la paroi supérieure 46 ne peuvent être désolidarisées les unes des autres sans entraîner la détérioration, voire la destruction, de l'adaptateur 29.

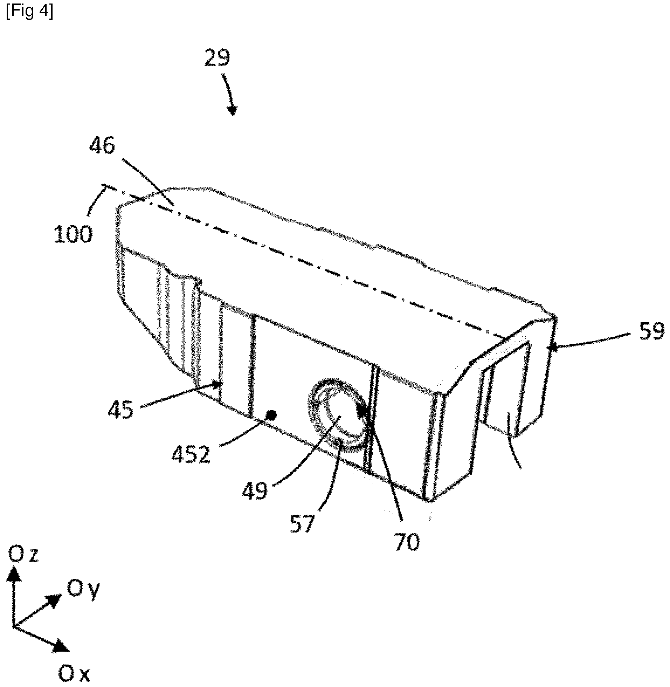

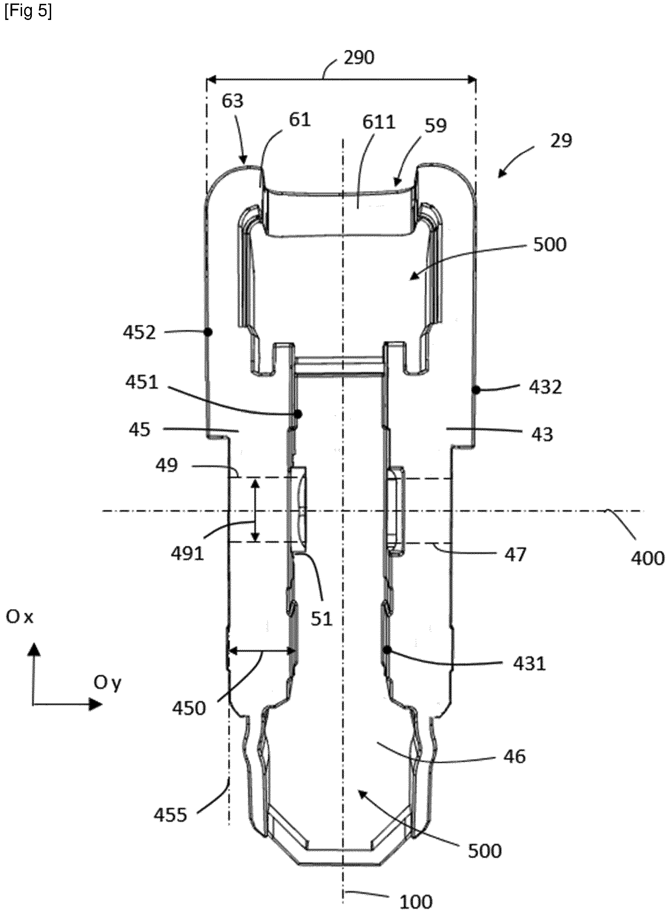

De manière optionnelle, tel qu'illustré aux figures 2 ou 5, une extrémité longitudinale 59 du dispositif de connexion 7, particulièrement de l'adaptateur 29, peut être au moins en partie fermée par un bord extrême 61 configuré de sorte, notamment, à prévenir l'accumulation de particules et débris dans le dispositif de connexion 7, par exemple au niveau de l'articulation du connecteur sur le balai d'essuyage. Avantageusement, un tel bord extrême 61 peut comprend au moins une entaille 611 de passage du balai d'essuyage, par exemple de l'un des déflecteurs 13 du balai d'essuyage 3. En l'espère, un tel bord extrême 61 est compris, selon un exemple non exhaustif, dans une tête 63 de l'adaptateur 29. Il est entendu que, pour l'ensemble de la description ci-après, l'adaptateur 29 pourra être réalisé de sorte à comprendre le bord extrême et/ou l'entaille 611 et/ou la tête 63, ou pourra en être dépourvu, par exemple tel que représenté à la figure 4.

Tel que visible dans au moins l'une des figures 2 à 5, la première paroi latérale 43 et la deuxième paroi latérale 45 de l'adaptateur 29 comprennent respectivement un premier orifice 47 et un deuxième orifice 49 aptes à recevoir le pion 23 du bras d'entraînement 5.

Le premier orifice 47 s'étend entre une face interne 431 de la première paroi latérale 43, qui est tournée vers un volume interne 500 de l'adaptateur 29, c'est-à-dire le logement défini à l'intérieur de l'adaptateur, et une face externe 432 de la première paroi latérale 43, opposée à la face interne 431 de la première paroi latérale 43. Chaque orifice est délimité radialement par un bord 69 formant une enveloppe cylindrique au sein de la paroi latérale correspondante. Le premier orifice 47 est au moins configuré pour guider le pion 23 dans le volume interne 500 de l'adaptateur 29. A titre d'exemple, celui-ci peut présenter une forme au moins partiellement cylindrique, par exemple de section circulaire ou polygonale. Par ailleurs, lorsque le pion 23 s'étend au travers du premier orifice 47, il peut ou non être en contact avec le bord 69 délimitant radialement le premier orifice 47.

Le deuxième orifice 49 est un orifice qui s'étend dans l'épaisseur de la deuxième paroi latérale 45, en débouchant au moins sur une face interne 451 de cette deuxième paroi latérale 45, tournée vers le volume interne 500 de l'adaptateur 29. Avantageusement, le premier orifice 47 et le deuxième orifice 49 peuvent être coaxiaux et centrés sur un même axe, par exemple l'axe de rotation 400 du connecteur 27 sur le pion 23.

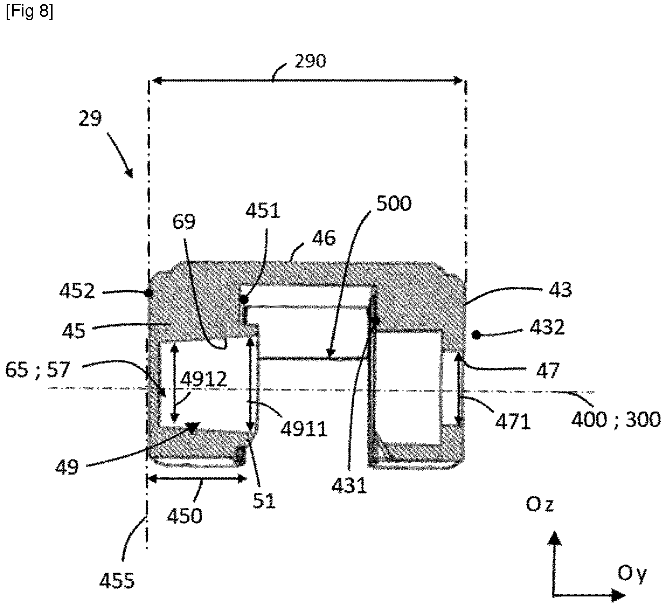

Dans les exemples illustrés sur les figures, à l'exception de la figure 8, le deuxième orifice 49 est un orifice traversant qui s'étend sur toute la dimension transversale de la deuxième paroi latérale 45, à savoir depuis la face interne 451 jusqu'à une face externe 452 de la deuxième paroi latérale 45, opposée à la face interne 451.

Dans la variante illustrée sur la figure 8, le deuxième orifice 49 est un orifice borgne qui s'étend dans l'épaisseur de la deuxième paroi latérale 45, depuis la face interne 451, le deuxième orifice étant délimité transversalement par une paroi de fond 490.

Quel que soit le mode de réalisation de l'adaptateur, l'adaptateur peut notamment se monter sur le connecteur solidaire du balai, puis on insère le pion dans l'adaptateur, avec le balai qui est incliné, par exemple à 45°, par rapport au bras pour que la patte 25 n'entre pas en butée avec l'adaptateur 29, puis on pivote le balai autour de l'axe formé par le pion de manière à mettre en regard la patte avec la paroi latérale de l'adaptateur.

Lorsque le système d'essuyage 1 est assemblé, l'adaptateur 29 est ainsi monté sur le bras d'entraînement 5 de sorte que la face externe 432 de la première paroi latérale 43 s'étende au moins en partie en appui du deuxième flanc 17 du bras d'entraînement 5, c'est-à-dire le flanc du bras d'entraînement 5 portant au moins en partie le pion 23 et le plus proche de l'adaptateur 29. Le pion 23 s'étend ainsi au travers du premier orifice 47, du volume interne 500 et du deuxième orifice 49 de l'adaptateur 29.

Le connecteur 27 est configuré pour s'étendre au moins en partie dans le volume interne 500 délimité par l'adaptateur 29. Notamment, le muret 39 est disposé dans le volume interne 500 de manière à positionner le trou transversal 41 en regard du premier orifice 47 et du deuxième orifice 49 de l'adaptateur 29. La liaison entre le connecteur 27 et l'adaptateur 29 peut, à titre d'exemple non exhaustif, se faire par encliquetage élastique, la ou les face(s) interne(s) 431, 451 de l'adaptateur 29 pouvant notamment comprendre un ou des toron(s) 51 cylindrique(s) configuré(s) pour border le premier orifice 47 et/ou le deuxième orifice 49 et pour coopérer avec le muret 39 du connecteur 27. De tels aménagements assurent, de manière avantageuse, l'engagement du connecteur 27 dans l'adaptateur 29 lors de l'assemblage du système d'essuyage 1 de sorte à rendre pivotant l'adaptateur 29, et donc le bras duquel il est rendu solidaire, par rapport au connecteur 27 et donc le balai.

La patte 25 du bras d'entraînement 5 s'étend transversalement à la direction longitudinale Ox, en recouvrement de la paroi supérieure 46 de l'adaptateur 29, en l'espèce le long de la direction transversale Oy. La patte 25 comprend au moins un rebord extrême 53 de butée de l'adaptateur 29 s'étendant verticalement, en regard de la deuxième paroi latérale 45 de l'adaptateur 29. Lorsque l'adaptateur et la patte ont des dimensions transversales correspondantes, la patte 25 est destinée à être en contact avec la paroi latérale de l'adaptateur opposée au bras d'entraînement, ici la deuxième paroi latérale, par l'intermédiaire du rebord extrême, l'adaptateur étant alors pris en sandwich entre le rebord extrême et le flanc du bras d'entraînement le plus proche. Une telle patte 25 vise ainsi à sécuriser la liaison mécanique entre le bras d'entraînement 5 et le balai d'essuyage 3 en bloquant au moins le mouvement de l'adaptateur 29 par rapport au bras d'entraînement 5 le long de la direction transversale Oy, c'est-à-dire selon la direction d'extension du pion 23.

Tel que cela a pu être évoqué, l'invention s'inscrit dans un contexte de standardisation des dispositifs de connexion 7 des systèmes d'essuyage 1 de sorte à permettre leur utilisation avec des bras d'entraînement 5 de formes et de dimensions variables, de sorte que les dimensions transversales de la patte et de l'adaptateur peuvent ne pas correspondre comme décrit ci-dessus. L'adaptateur 29 du système d'essuyage 1 selon la présente invention est avantageusement configuré de sorte à assurer le blocage du dispositif de connexion 7 par rapport au bras d'entraînement 5 le long de la direction transversale Oy, et ce malgré la différence potentielle entre la dimension transversale du bras d'entraînement 5, et de la patte 25 qu'il comprend, et celle de l'adaptateur.

Selon l'invention, la patte 25, et plus particulièrement une surface interne 55 du rebord extrême 53 de la patte 25, tournée vers le deuxième flanc 17 du bras d'entraînement 5, peut être à distance non nulle de la deuxième paroi latérale 45 tout en permettant un blocage en position transversale de l'adaptateur par rapport à bras, contrairement à ce qui est connu de l'art antérieur. Le blocage du mouvement latéral, ou transversal, se fait alors plus particulièrement par coopération de l'adaptateur 29 et du pion 23, ce qui permet d'utiliser ce système avec un adaptateur dont la largeur n'est pas prévue spécifiquement pour ce type de fixation.

Un exemple d'un tel système d'essuyage 1 assemblé est illustré à la figure 3. Une dimension transversale 50 de la patte 25 du bras d'entraînement 5, mesurée entre le deuxième flanc 17 et la surface interne 55 du rebord extrême 53, est strictement supérieure à une dimension transversale 290 correspondante de l'adaptateur 29, comprise entre la face externe 432 de la première paroi latérale 43 et la face externe 452 de la deuxième paroi latérale 45. La surface interne 55 du rebord extrême 53 s'étend à distance non nulle de la face externe 452 de la deuxième paroi latérale 45 de l'adaptateur 29 de sorte qu'il existe un jeu entre le rebord extrême 53 et la deuxième paroi latérale 45 de l'adaptateur 29 et que, pour un système d'essuyage classique, le blocage de l'adaptateur 29 par rapport au bras d'entraînement 5 le long de la direction transversale Oy ne pourrait être assuré dans au moins l'un des sens de ladite direction.

Afin d'assurer le blocage de l'adaptateur 29 le long de la direction transversale Oy, celui-ci est configuré de sorte que l'une des parois latérale 45, ici la deuxième paroi latérale, comprend au moins un moyen de fixation 57 configuré pour maintenir l'adaptateur 29 solidaire du bras d'entraînement 5 au moins le long de la direction transversale Oy, notamment en assurant la prise de l'adaptateur 29 sur le pion 23 du bras d'entraînement 5. Le moyen de fixation 57 selon l'invention est agencé dans la deuxième paroi latérale au voisinage du bord 69 délimitant le deuxième orifice 49 de manière à pouvoir coopérer avec le pion 23 amené à loger dans le deuxième orifice.

Il convient de noter que le moyen de fixation 57 coopère avec une portion d'extrémité libre du pion 23, c'est-à-dire une portion s'étendant à l'opposé, ou au moins à distance, du flanc du bras d'entraînement dont le pion fait saillie. A cet effet, le moyen de fixation 57 est compris dans la paroi latérale 43, 45 la plus distante du bras d'entraînement 5, ici la deuxième paroi latérale 45.

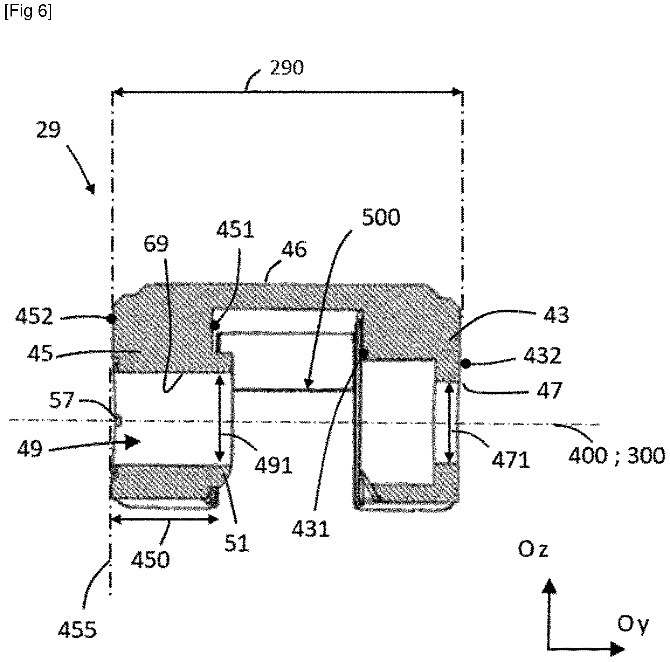

L'adaptateur 29 peut comprendre un ou plusieurs moyens de fixation 57, lesquels peuvent être réalisés selon différentes alternatives dont des exemples de réalisation sont illustrés aux figures 6 à 10. Il est entendu que de tels exemples ne sont en rien limitatifs et que l'adaptateur 29 pourra comprendre des combinaisons non illustrées de tels moyens de fixation 57. Ces différentes alternatives peuvent notamment être relatives à la forme et/ou à la matière de la deuxième paroi latérale 45 et du bord délimitant en son sein le deuxième orifice 49 ainsi qu'à la présence d'organes additionnels intégrés dans la deuxième paroi latérale 45 au voisinage du bord délimitant le deuxième orifice 49 de sorte à assurer la prise de l'adaptateur 29 sur le pion 23 du bras d'entraînement 5.

La deuxième paroi latérale 45 peut être configurée de sorte que le bord 69 délimitant le deuxième orifice 49 présente une forme sensiblement cylindrique circulaire ou une forme sensiblement tronconique circulaire. Dans la suite, on parlera indifféremment de forme cylindrique ou tronconique du bord délimitant le deuxième orifice ou de forme cylindrique ou tronconique du deuxième orifice.

Lorsque le deuxième orifice 49 est sensiblement cylindrique, tel qu'illustré aux figures 5 et 6, une section du deuxième orifice 49, réalisée perpendiculairement à la direction transversale Oy, est caractérisée par une dimension principale 491 du deuxième orifice 49, en l'espèce un diamètre, sensiblement constante sur l'ensemble d'une dimension transversale, ou épaisseur, 450 de la deuxième paroi latérale 45 de l'adaptateur 29. Une telle dimension principale 491 est notamment définie pour permettre l'insertion du pion 23 du bras d'entraînement 5 lors de l'assemblage du système d'essuyage 1.

Tel que précédemment exposé, le premier orifice 47 peut présenter une forme au moins en partie cylindrique. Une section du premier orifice 47, réalisée perpendiculairement à la direction transversale Oy, est définie par au moins une dimension principale 471 du premier orifice 47, en l'espèce un diamètre, qui peut, à titre d'exemple, être égale ou supérieure à la dimension principale 491 du deuxième orifice 49 afin de s'assurer que le pion traverse bien le premier orifice pour aller coopérer avec le deuxième orifice, après passage à travers le muret du connecteur, non représenté sur les figures 5 et 6.

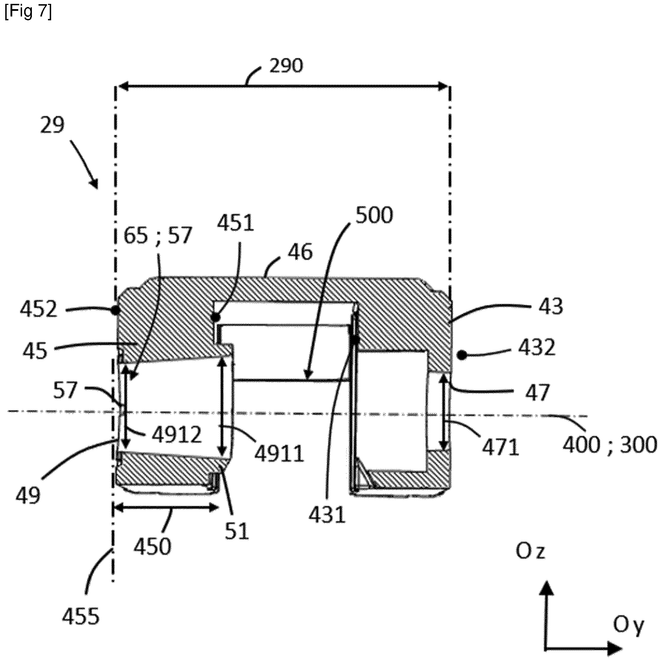

Lorsque le deuxième orifice 49 est sensiblement tronconique, tel qu'illustré aux figures 7 et 8, le deuxième orifice 49 est défini par au moins une première dimension principale 4911 et une deuxième dimension principale 4912 de valeur inférieure à la valeur de la première dimension principale. Notamment, la première dimension principale 4911 est caractéristique d'une première section du deuxième orifice 49, mesurée dans le plan défini par la direction longitudinale Ox et la direction verticale Oz, au niveau de la face interne 451 de la deuxième paroi latérale 45. La deuxième dimension principale 4912 est caractéristique d'une deuxième section, mesurée dans le plan défini par la direction longitudinale Ox et la direction verticale Oz, à l'opposé de la face interne 451, étant entendu que cette deuxième section peut être définie au niveau de la face externe 452 de la deuxième paroi latérale 45 de l'adaptateur 29 lorsque le deuxième orifice 49 est débouchant comme illustré sur la figure 7 ou au niveau de la paroi de fond 490 lorsque le deuxième orifice 49 est un trou borgne comme illustré sur la figure 8.

En l'espèce, le deuxième orifice 49 présente des première section et deuxième section sensiblement circulaires et les dimension principales 4911, 4912 consistent en des diamètres desdites sections.

Similairement à ce qui a été précédemment exposé, le premier orifice 47 peut présenter une forme au moins en partie cylindrique. Une section du premier orifice 47 réalisée perpendiculairement à la direction transversale Oy est définie par une dimension principale 471, telle qu'un diamètre ou une diagonale, qui peut, à titre d'exemple non exhaustif, être sensiblement égale, ou supérieure, à la première dimension principale 4911 de la première section du deuxième orifice 49.

Tel qu'évoqué précédemment, l'adaptateur comporte au moins un moyen de fixation 57 au niveau de la deuxième paroi latérale 45. Ce moyen de fixation 57 est déformable élastiquement. En d'autres termes, le moyen de fixation 57 est configuré pour se déformer sous l'effet de l'insertion du pion 23 dans le deuxième orifice 49, de manière à laisser passage au pion, et pour tendre à reprendre sa position d'origine en étant en prise sur le pion, de manière à bloquer transversalement celui-ci par compression radiale du moyen de fixation sur le pion.

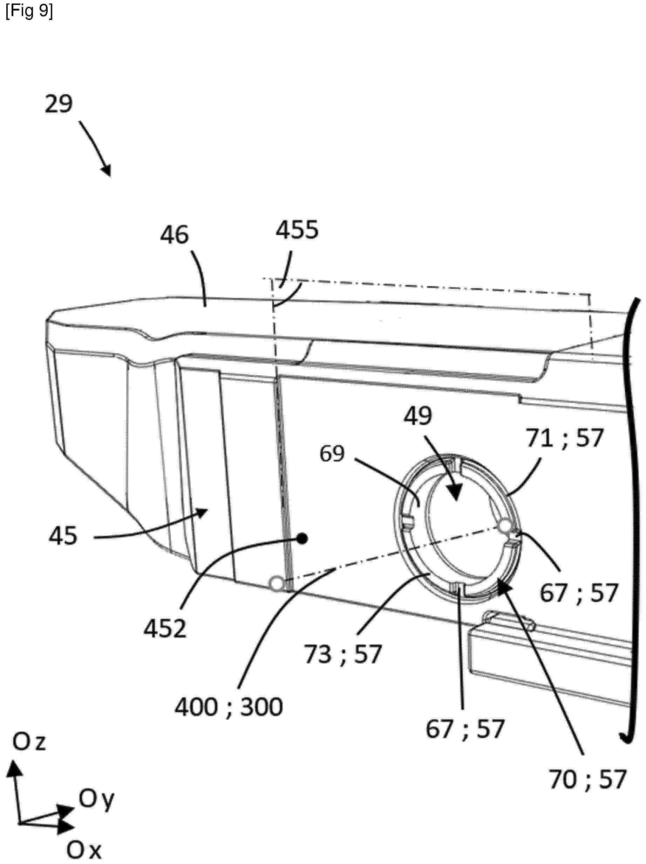

Selon un premier exemple de réalisation visible par exemple sur les figures 4 et 6 et qui sera décrit plus en détails ci-après en référence à la figure 9, cet au moins un moyen de fixation 57 peut être disposé sur la face externe 452 de la deuxième paroi latérale 45, au niveau de la jonction avec le bord 69 délimitant le deuxième orifice 49.

Notamment, l'adaptateur 29 peut être est au moins en partie réalisé dans un matériau synthétique, tel qu'un matériau polymère présentant des propriétés plus ou moins élastiques, par exemple un polymère thermoplastique, tel que du polyoxyméthylène, de l'ABS fibré (acrylonitrile butadiène styrène) ou du PBT chargé (Polytéréphtalate de butylène) selon le degré d'élasticité désiré.

Dans l'exemple qui vient d'être décrit d'un deuxième orifice de forme tronconique, la réduction de section participe à générer un tronçon d'étranglement 65, au niveau de la deuxième dimension principale 4912, qui forme un deuxième exemple de l'au moins un moyen de fixation 57.

Plus particulièrement, la deuxième dimension principale 4912 présente une valeur légèrement inférieure à celle de la dimension correspondante, à savoir la section dans un plan perpendiculaire à la direction transversale, du pion 23, de sorte qu'au moins le tronçon d'étranglement 65, tourné vers l'extérieur de l'adaptateur 29, est en prise sur le pion 23. Particulièrement, au moins le tronçon d'étranglement 65 présente une forme complémentaire du pion 23.

Dans ce contexte d'un deuxième orifice tronconique, l'insertion du pion tend à déformer élastiquement la deuxième paroi latérale lorsque l'extrémité libre du pion est à proximité de la portion d'étranglement, en agrandissant la deuxième dimension principale 4912 du bord 69 délimitant le deuxième orifice, et le degré d'élasticité de la matière choisi permet au bord délimitant le deuxième orifice de se resserrer autour du pion et d'assurer le blocage en position de celui-ci, au niveau du tronçon d'étranglement formant au moins un moyen de fixation.

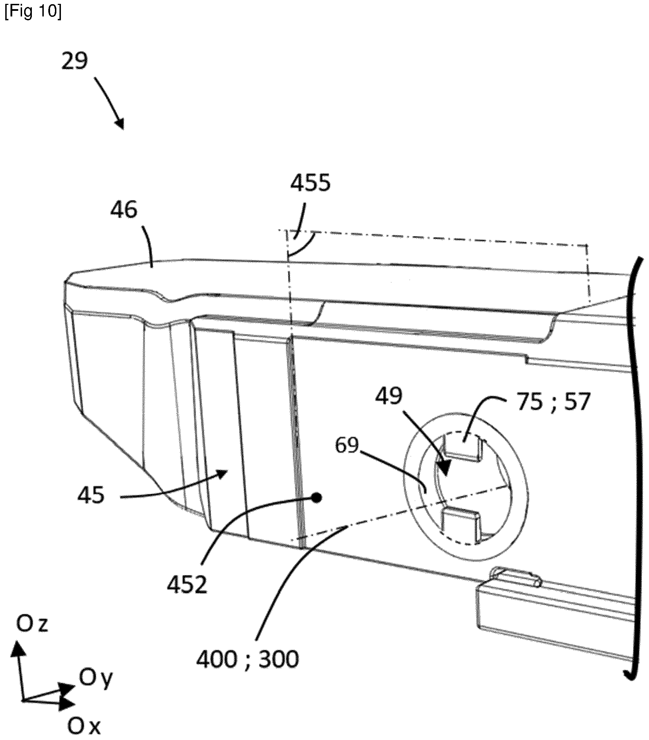

Également, indépendamment de la forme du deuxième orifice 49, la deuxième paroi latérale 45 peut comprendre un ou plusieurs moyen(s) de fixation 57 selon d'autres exemples de réalisation tels que schématiquement représentés, de manière non limitative, aux figures 9 et 10.

Le moyen de fixation 57 est dans ces cas disposé dans la face externe 452 de la deuxième paroi latérale 45, par exemple en périphérie plus ou moins proche du bord 69 délimitant le deuxième orifice 49.

La figure 9 illustre le moyen de fixation 57 selon le premier exemple de réalisation précédemment évoqué, qui présente la forme d'un anneau de serrage élastique 70 réalisé dans la matière de la deuxième paroi latérale. Plus particulièrement, la deuxième paroi latérale 45 comporte, à la jonction de la face externe 452 et du bord 69 délimitant le deuxième orifice, au moins une encoche 67 qui s'étend depuis le bord 69 délimitant le deuxième orifice radialement par rapport à l'axe de cet orifice et qui participe à former cet anneau de serrage élastique configuré pour enserrer, par déformation élastique la portion d'extrémité libre du pion 23.

Tel qu'illustré, l'anneau de serrage élastique 70 est notamment formé par une pluralité de lamelles 73 séparées les unes des autres par au moins une encoche 67 et rendues flexibles par la présence d'une gorge périphérique 71.

Plus particulièrement, l'au moins une encoche 67 présente une forme sensiblement parallélépipédique et s'étend à travers l'anneau de serrage élastique 70 agencé dans la matière de la deuxième paroi latérale, dans la face externe 452 de celle-ci et tout autour du deuxième orifice 49. En l'espèce, cet anneau de serrage formant le moyen de fixation 57 comprend quatre encoches 67 régulièrement réparties angulairement. Ces encoches 67 s'étendent en creux d'un plan externe 455 dans lequel s'inscrit essentiellement la face externe 452 de la deuxième paroi latérale 45 de sorte qu'elles s'étendent dans l'épaisseur 450 de la deuxième paroi latérale 45. Il est entendu que le nombre, la forme et la position des encoches 67 représentées à la figure 9 ne sont en rien limitatifs et pourront être altérés.

L'anneau de serrage élastique 70 est délimité radialement, par rapport à l'axe du deuxième orifice, par la gorge 71 qui s'étend tout autour du bord 69 délimitant le deuxième orifice 49 et qui définit au moins une lamelle 73 entre cette gorge 71 et le deuxième orifice 49, chaque lamelle étant séparée d'une lamelle voisine par une encoche 67, chaque encoche s'étendant radialement depuis le bord 69 délimitant le deuxième orifice jusqu'à la gorge 71.

Le profil saillant de chacune des lamelles 73, résultant de leur positionnement entre la gorge 71 et le deuxième orifice 49, peut être configuré de telle manière que chacune de ces lamelles 73 affleure, au moins en partie, la face externe 452 de la deuxième paroi latérale 45, par exemple de sorte à être en partie comprise dans le plan externe 455.

En l'espèce, le moyen de fixation 57 comprend ainsi quatre lamelles 73 qui sont chacune en partie délimitées par deux encoches 67. Tel que précédemment exposé, il est entendu que le nombre, la forme et la position de la gorge 71 et/ou des lamelles 73 représentées à la figure 9 ne sont en rien limitatifs et pourront être altérés.

Lors de l'insertion du pion dans la deuxième paroi latérale, les lamelles 73 tendent à s'écarter radialement, en direction de la gorge 71, pour laisser passage à la portion d'extrémité libre du pion 23, et leur caractère élastique, accentuée par le découpage angulaire réalisé par l'intermédiaire des encoches, tend à ramener les lamelles en direction de l'axe du deuxième orifice et à assurer la prise, par compression radiale, du pion.

Selon un troisième exemple de réalisation du moyen de fixation 57, celui-ci peut comprendre, soit de manière alternative, tel qu'illustré à la figure 10, soit en combinaison de l'anneau de serrage élastique précédemment décrit, au moins une languette 75 souple s'étendant en travers du deuxième orifice 49, en formant une saillie radiale du bord 69 délimitant le deuxième orifice 49.

La languette 75 présente une forme allongée, et notamment, de manière non exhaustive, une forme sensiblement parallélépipédique. Elle s'étend radialement, depuis le bord 69 délimitant le deuxième orifice, ici à la jonction de ce bord et de la surface externe 452 de la deuxième paroi latérale 45, et en direction, par exemple, de l'axe de rotation 400. La languette 75 présente une faible épaisseur et peut être déformée, élastiquement par exemple, d'une part afin de permettre l'insertion du pion 23 au travers du deuxième orifice 49 et, d'autre part, afin d'assurer une prise, par retour élastique, dudit pion 23 une fois le système d'essuyage 1 assemblé.

Ainsi la deuxième paroi latérale 45 peut comprendre un ou plusieurs moyen(s) de fixation 57 lesquels peuvent, par exemple, comprendre une combinaison d'un tronçon d'étranglement 65 et/ou d'au moins un anneau de serrage élastique 70 et/ou au moins une languette 75. Tel que précédemment exposé, chacune de ces alternatives de réalisation de l'adaptateur 29 peut par ailleurs être au moins partiellement réalisée dans un matériau élastiquement déformable de sorte à optimiser la fonction de fixation du pion par la deuxième paroi latérale 45 et son ou ses moyens de fixation 57.

De manière particulière, l'adaptateur 29 peut être réalisé de manière monobloc par injection de plusieurs matériaux aux caractéristiques d'élasticité différentes, l'au moins un anneau de serrage élastique 70 et/ou l'au moins une languette 75 étant réalisés dans un matériau plus élastique que le reste de l'adaptateur.

Tel que cela a pu être évoqué, lors de l'assemblage du système d'essuyage 1, le bras d'entraînement 5 est monté sur le dispositif de connexion 7. Le pion 23 est engagé dans le premier orifice 47, puis dans le trou transversal 41 du connecteur 27, qui s'étend dans le volume interne 500 de l'adaptateur 29, avant d'être inséré au travers du deuxième orifice 49 selon un mouvement en translation le long de la direction transversale Oy et ce jusqu'à ce que le deuxième flanc 17 latéral du bras d'entraînement 5 soit en appui contre la face externe 432 de la première paroi latérale 43 de l'adaptateur 29, tel qu'illustré à la figure 3. Dans cette position, l'au moins un moyen de fixation 57 compris dans la deuxième paroi latérale 45 contribue à assurer le blocage du dispositif de connexion 7 le long de la direction transversale Oy par maintien de l'engagement du pion 23 du bras d'entraînement 5 au travers de la deuxième paroi latérale 45. Le bras d'entraînement 5 est ensuite pivoté vers le bas autour de l'axe de pivotement 300 de sorte à déplacer la patte 25 vers le dispositif de connexion 7 jusqu'à ce que le rebord extrême 53 de la patte 25 s'étende en regarde de la face externe 452 de la deuxième paroi latérale 45.

Pour désassembler le balai d'essuyage 3 équipé du dispositif de connexion 7 du bras d'entraînement, il suffit de réaliser, dans l'ordre inverse, les étapes de la cinématique d'assemblage décrites plus haut.

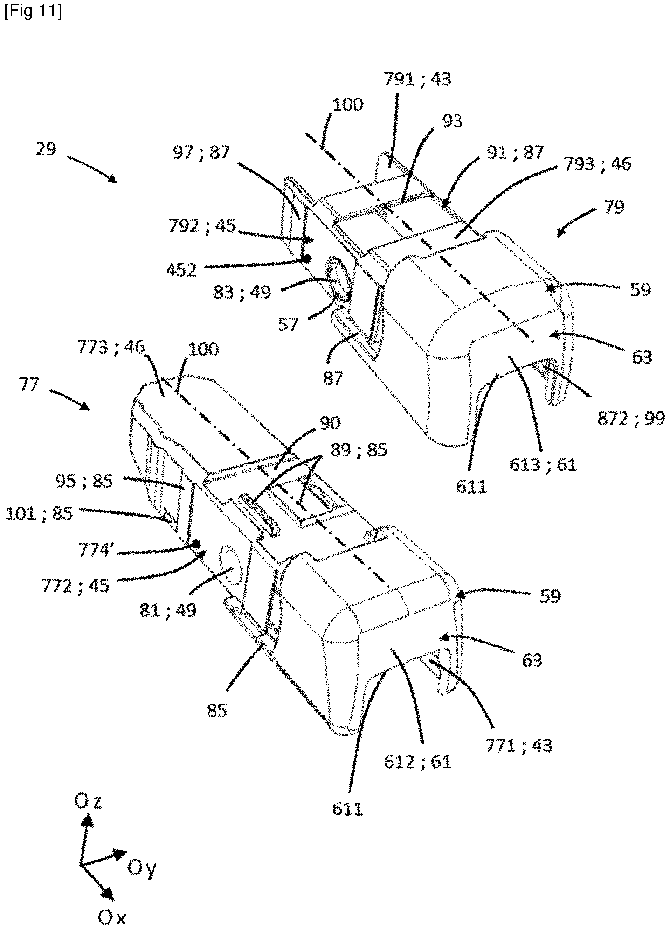

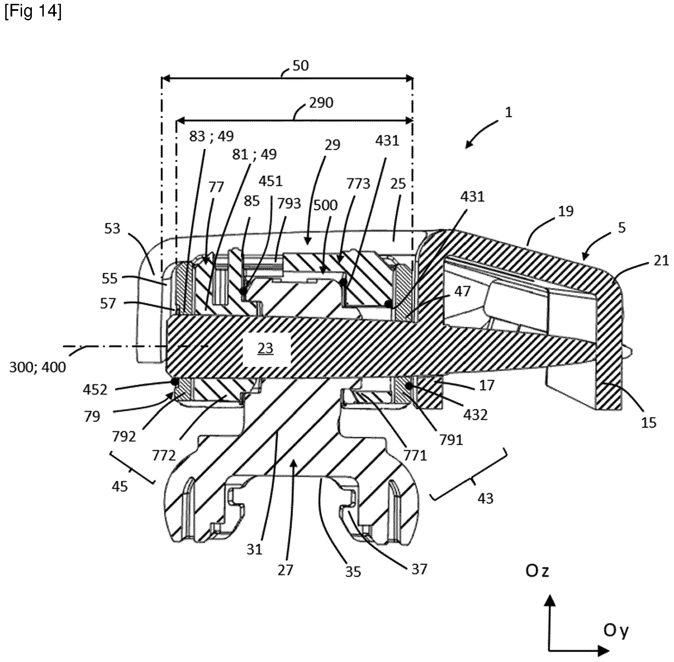

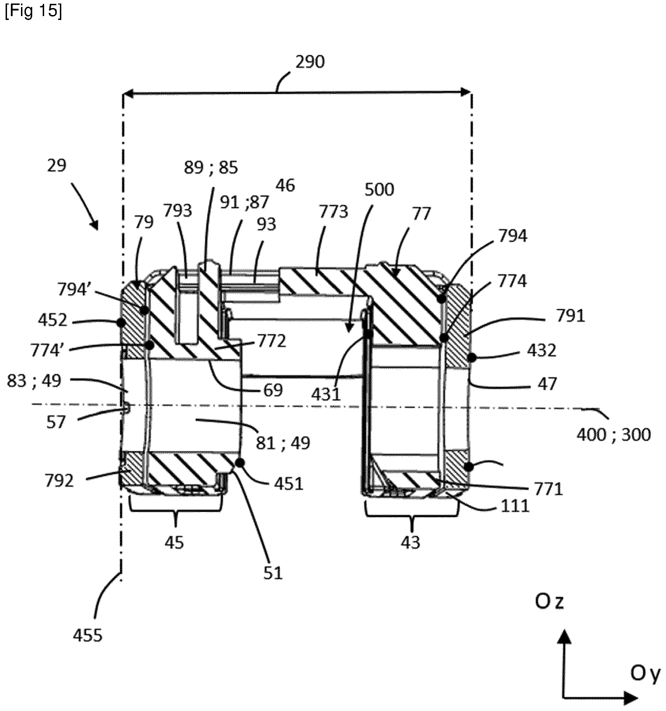

Les figures 11 à 17 illustrent différentes vues d'un deuxième mode de réalisation du système d'essuyage 1, sensiblement identique au deuxième mode de fonctionnement, de sorte qu'on pourra se reporter à la description faite ci-dessus qui s'applique mutatis-mutandis. Le présent mode de réalisation se distingue du premier mode de réalisation en ce que l'adaptateur 29 comprend une pluralité de pièces, notamment au moins un élément primaire 77 et un élément secondaire 79, rapporté sur l'élément primaire 77 et disposé en prise dudit élément primaire 77.

L'élément primaire 77 comprend une première paroi latérale primaire 771 et une deuxième paroi latérale primaire 772 distantes l'une de l'autre et reliées entre elles par une paroi supérieure primaire 773.

Similairement, l'élément secondaire 79 comprend une première paroi latérale secondaire 791 et une deuxième paroi latérale secondaire 792 distantes l'une de l'autre et reliées entre elles par une paroi supérieure secondaire 793.

L'élément primaire 77 et l'élément secondaire 79 sont ainsi configurés pour coopérer de sorte que la première paroi latérale 43 de l'adaptateur 29 comprend au moins la première paroi latérale primaire 771 et la première paroi latérale secondaire 791, tandis que la deuxième paroi latérale 45 de l'adaptateur 29 comprend au moins la deuxième paroi latérale primaire 772 et la deuxième paroi latérale secondaire 792 et la paroi supérieure 46 de l'adaptateur 29 comprend la paroi supérieure primaire 773 et la paroi supérieure secondaire 793. En d'autres termes, l'élément primaire 77 comprend la face interne 431 de la première paroi latérale 43 et la face interne 451 de la deuxième paroi latérale 45 telles que précédemment exposées, tandis que l'élément secondaire 79 comprend la face externe 432 de la première paroi latérale 43 et la face externe 452 de la deuxième paroi latérale 45. L'élément secondaire 79 chevauche l'élément primaire 77 en présentant chacun des profils au moins partiellement complémentaires.

Également, la première paroi latérale secondaire 791 et la deuxième paroi latérale secondaire 792 de l'élément secondaire 79 comprennent respectivement des faces internes intermédiaires 794, 794', opposées aux faces externes 432, 452 de l'élément secondaire 79. Similairement la première paroi latérale primaire 771 et la deuxième paroi latérale primaire 772 de l'élément primaire 77 comprennent respectivement des faces externes intermédiaires 774, 774', opposées aux faces internes 431, 451 de l'adaptateur 29, les faces internes intermédiaires 794, 794' de l'élément secondaire 79 étant au moins partiellement en contact avec les faces externes intermédiaires 774, 774' de l'élément primaires 77. La coopération entre l'élément primaire 77 et l'élément secondaire 79 sera davantage détaillée ci-après.

Un tel arrangement de l'adaptateur 29 permet, de manière avantageuse, sa réalisation dans différents matériaux. Notamment, de sorte à renforcer la structure de l'adaptateur 29 tout en assurant la fonction évoquée précédemment de blocage du pion le long de la direction transversal, l'un ou l'autre des élément primaire 77 et élément secondaire 79 peut être réalisé dans un matériau polymère thermoplastique sensiblement rigide tandis que l'autre peut être réalisé dans un matériau plus souple, présentant des propriétés de déformation élastique plus élevées que l'élément thermoplastique. A titre d'exemple non exhaustif, au moins l'élément de l'adaptateur 29 comprenant l'au moins un moyen de fixation 57, ici l'élément secondaire 79, est réalisé dans un matériau polymère élastiquement déformable.

L'ensemble des caractéristiques exposées précédemment dans le premier mode de réalisation relativement au deuxième orifice 49 peuvent être transposées mutatis mutandis au présent mode de réalisation, à la différence que, en lieu d'un deuxième orifice 49 réalisé d'un seul tenant dans l'épaisseur 450 de la deuxième paroi latérale 45, le deuxième orifice 49 de l'adaptateur 29 selon le deuxième mode de réalisation comprend un premier tronçon 81 du deuxième orifice 49, compris dans la deuxième paroi latérale primaire 772 de l'élément primaire 77, et un deuxième tronçon 83 du deuxième orifice 49, compris dans la deuxième paroi latérale secondaire 792 de l'élément secondaire 79. De tels premier tronçon 81 du deuxième orifice 49 et deuxième tronçon 83 du deuxième orifice 49 s'étendent au moins en partie en regard l'un de l'autre lorsque l'élément secondaire 79 est disposé en chevauchement de l'élément primaire 77, de sorte à former un orifice continu apte à recevoir le pion 23 du bras d'entraînement 5. De manière particulière, ils peuvent être centrés sur un même axe, par exemple l'axe de rotation 400 du connecteur 27 sur l'adaptateur 29.

Également, le premier tronçon 81 du deuxième orifice 49 et le deuxième tronçon 83 du deuxième orifice 49 peuvent être configurés de sorte que le deuxième orifice 49 présente une forme sensiblement cylindrique, tel que précédemment exposé en référence à la figure 6, ou tronconique, tel que précédemment exposé en référence aux figures 7 et 8. De même, le deuxième tronçon 83 du deuxième orifice 49 et/ou la deuxième paroi latérale secondaire 792 de l'élément secondaire 79 de l'adaptateur 29 peut comprendre l'un quelconque des exemples de réalisation de l'au moins un moyen de fixation 57 tel que précédemment décrits en références aux figures 7 à 10. Selon un exemple non illustré, le deuxième tronçon 83 du deuxième orifice 49 peut comprendre le tronçon d'étranglement 65 du moyen de fixation 57.

Similairement à ce qui a été exposé en référence au premier mode de réalisation, l'adaptateur 29 peut comprendre, de manière optionnelle, au niveau de son extrémité longitudinale 59 le bord extrême 61. Avantageusement, un tel bord extrême 61 peut comprendre un bord extrême primaire 612, compris dans l'élément primaire 77, et/ou un bord extrême secondaire 613, au moins partiellement complémentaire du bord extrême primaire 611 et l'entourant au moins en partie. Il en va de même pour l'entaille 611 et/ou la tête 63 tels que précédemment exposées, qui peuvent être transposées de sorte à être intégrées dans l'élément primaire 77 et/ou l'élément secondaire 79.

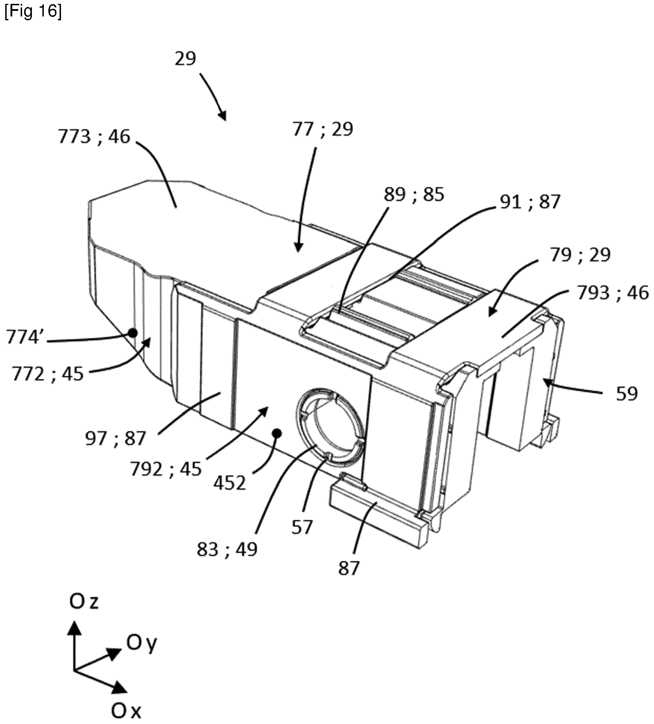

Ainsi, l'adaptateur 29 pourra comprendre un bord extrême 61 comportant le bord extrême primaire 611 seul, ou en combinaison du bord extrême secondaire 613, tel qu'illustré aux figures 11 à 13, ou pourra être ouvert au niveau de son extrémité longitudinale 59, tel que représenté à la figure 16.

Afin de maintenir l'élément primaire 77 et l'élément secondaire 79 solidaires l'un de l'autre, notamment le long de la direction longitudinale Ox, l'élément primaire 77 comprend au moins un organe de blocage 85 et l'élément secondaire 79 comprend au moins un moyen complémentaire de blocage 87, configuré pour coopérer avec au moins l'organe de blocage 85.

Avantageusement, l'adaptateur 29 peut comprendre une pluralité d'organes de blocage 85 et de moyens complémentaires de blocage 87 dont différents exemples sont illustrés aux figures 11 à 17. Ceux-ci peuvent présenter des structures similaires ou, tel qu'illustré, différentes. Il est entendu que l'adaptateur 29 pourra être configuré de sorte à ne comprendre qu'une partie des différents organes de blocage 85 et moyens complémentaires de blocage 87 représentés dans lesdites figures.

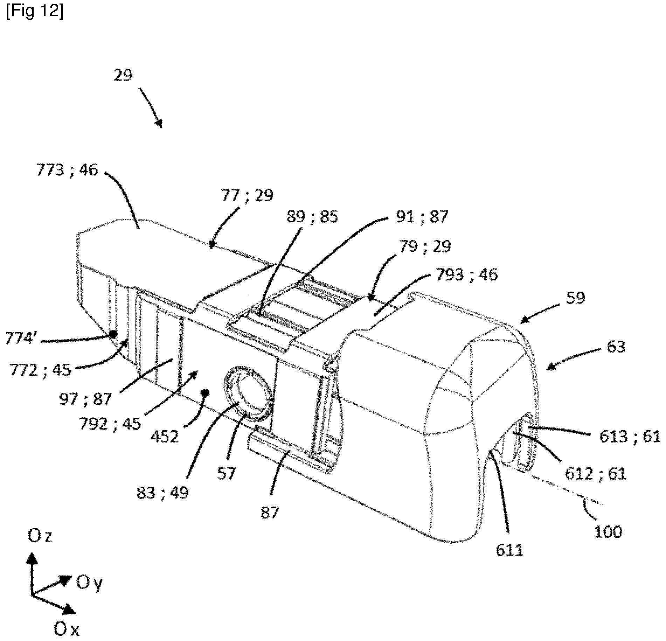

Un premier exemple d'un organe de blocage 85 selon l'invention consiste en au moins une nervure de blocage 89 pouvant s'étendre en saillie de la paroi supérieure primaire 773 ou plus particulièrement, tel qu'illustré sur la figure 11 et 12 par exemple, en saillie d'un dégagement de matière formé dans la paroi supérieure primaire 773. Dans l'exemple illustré l'organe de blocage 85 s'étend le long de la direction longitudinale Ox. De manière alternative, une telle nervure de blocage 89 pourra s'étendre selon la direction transversale Oy. Avantageusement, l'élément primaire 77 de l'adaptateur 29 comprend une pluralité de nervures de blocage 89.

L'élément secondaire 79 comprend au moins un moyen complémentaire de blocage 87 configuré pour coopérer avec les nervures de blocage 89 de sorte à entraver les déplacements de l'élément secondaire 79 le long d'au moins la direction longitudinale Ox. En l'espèce, l'élément secondaire 79 comprend une fenêtre 91 dans laquelle vient s'étendre au moins l'une des nervures de blocage 89 et dont au moins un bord périphérique 93 est configuré pour former butée de ladite nervure de blocage 89 le long de la direction longitudinale Ox. En l'espèce, l'élément secondaire 79 comprend une fenêtre 91 dans laquelle s'étendent les différentes nervures de blocage 89.

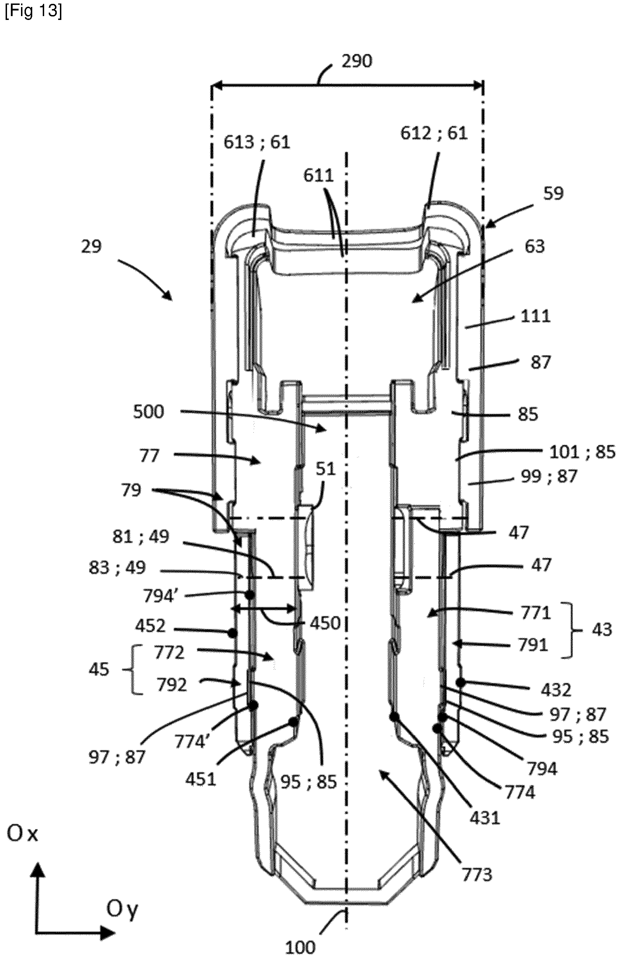

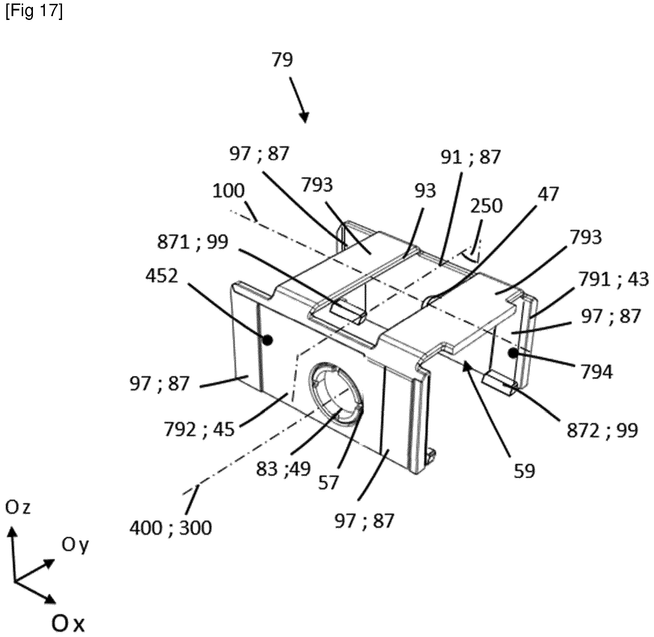

Un deuxième exemple d'organe de blocage 85 peut consister, à titre d'exemple, en au moins un lamage, dit lamage primaire 95, de l'élément primaire 77, pouvant être compris dans la première paroi latérale primaire 771 et/ou dans la deuxième paroi latérale primaire 772 et/ou dans la paroi supérieure primaire 773. Un tel lamage primaire 95 est configuré pour coopérer avec au moins un moyen complémentaire de blocage 87 compris dans l'élément secondaire 79, en l'espèce un lamage de forme complémentaire dit lamage secondaire 97, par exemple visible à la figure 13 ou à la figure 17.

Un troisième exemple de moyen complémentaire de blocage de l'élément secondaire 79 peut consister en au moins une dent secondaire 99, visible sur la figure 11 ou sur la figure 17, s'étendant en saillie d'au moins l'une des faces internes intermédiaires 794, 794' de la première paroi latérale secondaire 791 et/ou de la deuxième paroi latérale primaire 772 de sorte à s'étendre vers le volume interne 500 de l'adaptateur 29, c'est-à-dire vers l'élément primaire 77 de l'adaptateur 29. Une telle dent secondaire 99 peut, à titre d'exemple non exhaustif, être configurée pour coopérer avec au moins un organe de blocage 85 consistant en une fente primaire 101 de forme complémentaire s'ouvrant dans au moins l'une des faces externes intermédiaires 774, 774' de la première paroi latérale primaire 771 et/ou de la deuxième paroi latérale primaire 772 de l'élément primaire 77, disposée en regard de la dent secondaire 99.

Selon un mode de réalisation particulier de réalisation du système d'essuyage 1 selon le deuxième mode de réalisation, dont un exemple est illustré à la figure 17, lorsqu'au moins l'élément secondaire 79 présente une extrémité longitudinale 59 ouverte, c'est-à-dire qu'il est dépourvu de bord extrême 61, celui-ci peut avantageusement être configuré de sorte que l'au moins un moyen complémentaire de blocage 87 s'étende symétriquement de part et d'autre d'un plan médian 250, vertical et transversal, de l'élément secondaire 79, orthogonal à l'axe longitudinal 100, de l'élément secondaire 79.

Une telle configuration permet, de manière avantageuse, la réversibilité de l'élément secondaire 79 sur l'élément primaire 77. En d'autres termes, l'élément secondaire 79 tel que précédemment exposé peut être désassemblé de l'élément secondaire 79, pivoté à 180° par rapport autour de la direction verticale Oz, puis réassemblé sur l'élément primaire 77 de sorte que la première paroi latérale primaire 771 s'étende en regard de la deuxième paroi latérale secondaire 792 et que la deuxième paroi latérale primaire 772 s'étende en regard de la première paroi latérale secondaire 791. De la sorte, le dispositif de connexion 7 du système d'essuyage 1 selon l'invention peut également être étendu à une utilisation avec un bras d'entraînement 5 configuré pour être disposé à l'opposé de l'adaptateur 29 le long de la direction transversale Oy, par exemple de l'autre côté du plan externe 455 de la deuxième paroi latérale 45, en lieu de la position adoptée par le bras d'entraînement 5 tel que précédemment décrit.

Dans une telle configuration inversée, non illustrée, la première paroi latérale 43 de l'adaptateur 29 comprend alors la deuxième paroi latérale primaire 772 de l'élément primaire 77 tel que précédemment exposé et la première paroi latérale secondaire 791 de l'élément secondaire 79 tandis que la deuxième paroi latérale 45 de l'adaptateur 29 comprend la première paroi latérale primaire 771 et la deuxième paroi latérale secondaire 792. En d'autres termes, la deuxième paroi latérale 45 de l'adaptateur 29 est la paroi de l'adaptateur 29 comprenant la deuxième paroi latérale secondaire 792, c'est-à-dire la paroi latérale pouvant comprendre, au moins en partie, le moyen de fixation 57. De même, on qualifie de deuxième orifice 49 l'orifice comprenant le deuxième tronçon 83 pouvant comprendre, au moins en partie, le moyen de fixation 57.

Un tel arrangement est ainsi adapté pour des bras d'entraînement 5 configurés pour être disposés en regard de la deuxième paroi latérale primaire 772 et non en regard de la première paroi latérale comportant la première paroi latérale primaire tel que précédemment exposé. Similairement à ce qui a été exposé précédemment, l'au moins un moyen de fixation 57 est compris dans la paroi latérale de l'adaptateur 29 le plus distant du bras d'entraînement 5.

Tel qu'illustré à la figure 17, l'adaptateur 29 peut comprendre une pluralité de moyens complémentaires de blocage 87, parmi lesquels au moins un premier moyen complémentaire de blocage 871 et un deuxième moyen complémentaire de blocage 872, disposés symétriquement l'un à l'autre par rapport au plan médian 250, perpendiculaire à l'axe longitudinal Ox, de l'élément secondaire 79. Le premier moyen complémentaire de blocage 871 et le deuxième moyen complémentaire de blocage 872 peuvent être réalisés selon l'un quelconque des exemples de réalisation tels que précédemment exposés, c'est-à-dire qu'ils peuvent consister en une pluralité de fenêtres 91 et/ou de lamages secondaires 97 et/ou de dents secondaires 99 ou de toute autre alternative desdits exemples de réalisation tels que précédemment exposés. En l'espèce, dans l'exemple d'élément secondaire 79 tel qu'illustré à la figure 17, le premier moyen complémentaire de blocage 871 et le deuxième moyen complémentaire de blocage 872 consistent en des dents secondaires 99.

On comprend à la lecture de ce qui précède que la présente invention propose un adaptateur, dans un dispositif de connexion d'un système d'essuyage, qui est configuré pour s'adapter à une pluralité de bras d'entraînement différents, parmi lesquels notamment des bras d'entraînement de type « side-lock », c'est-à-dire comprenant au moins un pion de rotation du dispositif d'entraînement s'étendant transversalement à une direction longitudinale d'extension dudit bras. L'adaptateur du dispositif de connexion comprend ainsi au moins une première paroi latérale et une deuxième paroi latérale comportant chacune un premier orifice et un deuxième orifice configurés pour recevoir le pion du bras d'entraînement et la deuxième paroi latérale comprend au moins un moyen de fixation configuré pour bloquer l'adaptateur au moins le long de la direction transversale Oy par rapport au pion du bras d'entraînement. L'invention ne saurait toutefois se limiter aux moyens et configurations décrits et illustrés ici, et est définie par les revendications ci-jointes.

En particulier, la forme et/ou les dimensions de l'adaptateur du dispositif de connexion, ou des organes de blocage et/ou moyens complémentaires de blocage peut être modifiée sans nuire à l'invention, dans la mesure où ces composants, in fine, remplissent les mêmes fonctionnalités que celles décrites dans ce document.

## Revendications

1. Adaptateur (29) d'un dispositif de connexion (7) configuré pour connecter un balai d'essuyage (3) à un bras d'entraînement (5) dans un système d'essuyage (1) pour véhicule automobile, comprenant une première paroi latérale (43) et une deuxième paroi latérale (45) distantes l'une de l'autre et reliées entre elles par une paroi supérieure (46), la première paroi latérale (43) et la deuxième paroi latérale (45) comprenant respectivement un premier orifice (47) et un deuxième orifice (49) aptes à recevoir un pion (23) s'étendant le long d'une direction transversale (Oy) en saillie du bras d'entraînement (5),
la deuxième paroi latérale (45) comprenant au moins un moyen de fixation (57) du pion (23) dans le deuxième orifice (49) configuré pour maintenir l'adaptateur (29) solidaire du bras d'entraînement (5) au moins le long de la direction transversale (Oy), **caractérisé en ce que** l'au moins un moyen de fixation (57) consiste en un anneau de serrage élastique (70) réalisé dans la matière de la deuxième paroi latérale (45), ledit anneau de serrage élastique (70) s'étendant au moins en partie dans une face externe (452) de la deuxième paroi latérale (45).

2. Dispositif de connexion (7) configuré pour connecter un balai d'essuyage (3) à un bras d'entraînement (5) dans un système d'essuyage (1) pour véhicule automobile, le dispositif de connexion (7) comprenant au moins un connecteur (27), configuré pour être rendu solidaire du balai d'essuyage (3) et comprenant au moins un trou transversal (41) apte à recevoir le pion (23), et un adaptateur (29) conforme à revendication précédente et monté pivotant autour d'un axe de rotation (400) sur le connecteur (27) pour relier le connecteur (27) au bras d'entraînement.

3. Système d'essuyage (1) pour véhicule automobile comprenant un balai d'essuyage (3), un bras d'entraînement (5) et un dispositif de connexion (7) selon la revendication précédente, le bras d'entraînement (5) comprenant au moins un pion (23) et une patte (25) s'étendant tous deux le long d'une direction transversale (Oy) en saillie d'une portion terminale (21) du bras d'entraînement (5).

4. Système d'essuyage (1) selon la revendication précédente, dans lequel la portion terminale (21) du bras d'entraînement (5) comprend au moins un premier flanc (15) et un deuxième flanc (17), au moins le deuxième flanc (17) portant le pion (23) et le deuxième flanc (17) étant au moins en partie en appui contre une face externe (432) de la première paroi latérale (43) de l'adaptateur (29).

5. Système d'essuyage (1) selon l'une des revendications 3 ou 4, dans lequel la patte (25) comprend au moins un rebord extrême (53) de butée de l'adaptateur (29) s'étendant en regard de la deuxième paroi latérale (45) de l'adaptateur (29).

6. Système d'essuyage (1) selon la revendication précédente, dans lequel la patte (25) est définie par une dimension transversale (50), mesurée entre le deuxième flanc (17) et une surface interne (55) du rebord extrême (53), la dimension transversale (50) étant strictement supérieure à une dimension transversale (290) correspondante de l'adaptateur (29), mesurée entre la face externe (432) de la première paroi latérale (43) et la face externe (452) de la deuxième paroi latérale (45), la surface interne (55) du rebord extrême (53) s'étendant à distance non nulle de la face externe (452) de la deuxième paroi latérale (45) de l'adaptateur (29).

7. Véhicule automobile comprenant un système d'essuyage (1) selon l'une quelconque des revendications 3 à 6.

## Patentansprüche

1. Adapter (29) einer Verbindungsvorrichtung (7), die zum Verbinden eines Wischblatts (3) mit einem Antriebsarm (5) in einem Wischersystem (1) für ein Kraftfahrzeug konfiguriert ist, mit einer ersten Seitenwand (43) und einer zweiten Seitenwand (45), die voneinander beabstandet und durch eine obere Wand (46) miteinander verbunden sind, wobei die erste Seitenwand (43) und die zweite Seitenwand (45) jeweils eine erste Öffnung (47) und eine zweite Öffnung (49) aufweisen, die geeignet sind, einen Stift (23) aufzunehmen, der sich entlang einer Querrichtung (Oy) erstreckt und aus dem Antriebsarm (5) herausragt,
wobei die zweite Seitenwand (45) mindestens ein Befestigungsmittel (57) des Stifts (23) in der zweiten Öffnung (49) aufweist, das so konfiguriert ist, dass es den Adapter (29) zumindest entlang der Querrichtung (Oy) fest mit dem Antriebsarm (5) verbunden hält, **dadurch gekennzeichnet, dass** das mindestens eine Befestigungsmittel (57) aus einem elastischen Klemmring (70) besteht, der aus dem Material der zweiten Seitenwand (45) hergestellt ist, wobei sich der elastische Klemmring (70) mindestens teilweise in eine Außenfläche (452) der zweiten Seitenwand (45) erstreckt.

2. Verbindungsvorrichtung (7), die zum Verbinden eines Wischblatts (3) mit einem Antriebsarm (5) in einem Wischersystem (1) für ein Kraftfahrzeug konfiguriert ist, wobei die Verbindungsvorrichtung (7) mindestens einen Verbinder (27) aufweist, der konfiguriert ist, um mit dem Wischblatt (3) fest verbunden zu werden, und mindestens ein Querloch (41) aufweist, das den Stift (23) aufnehmen kann, und einen Adapter (29), der dem vorhergehenden Anspruch entspricht und um eine Drehachse (400) schwenkbar an dem Verbinder (27) montiert ist, um den Verbinder (27) mit dem Antriebsarm zu verbinden.

3. Wischersystem (1) für ein Kraftfahrzeug mit einem Wischblatt (3), einem Antriebsarm (5) und einer Verbindungsvorrichtung (7) nach dem vorhergehenden Anspruch, wobei der Antriebsarm (5) mindestens einen Stift (23) und eine Lasche (25) aufweist, die sich beide entlang einer Querrichtung (Oy) erstrecken und von einem Endabschnitt (21) des Antriebsarms (5) hervorstehen.

4. Wischersystem (1) nach dem vorhergehenden Anspruch, wobei der Endabschnitt (21) des Antriebsarms (5) mindestens eine erste Flanke (15) und eine zweite Flanke (17) aufweist, wobei mindestens die zweite Flanke (17) den Stift (23) trägt und die zweite Flanke (17) mindestens teilweise an einer Außenfläche (432) der ersten Seitenwand (43) des Adapters (29) anliegt.

5. Wischersystem (1) nach einem der Ansprüche 3 oder 4, wobei die Lasche (25) mindestens eine Endkante (53) als Anschlag für den Adapter (29) aufweist, die sich gegenüber der zweiten Seitenwand (45) des Adapters (29) erstreckt.

6. Wischersystem (1) nach dem vorhergehenden Anspruch, wobei die Lasche (25) durch eine Querabmessung (50) definiert ist, die zwischen der zweiten Flanke (17) und einer Innenfläche (55) der Endkante (53) gemessen wird, wobei die Querabmessung (50) strikt größer ist als eine entsprechende Querabmessung (290) des Adapters (29), gemessen zwischen der Außenfläche (432) der ersten Seitenwand (43) und der Außenfläche (452) der zweiten Seitenwand (45), wobei sich die Innenfläche (55) der Endkante (53) in einem von Null verschiedenen Abstand von der Außenfläche (452) der zweiten Seitenwand (45) des Adapters (29) erstreckt.

7. Kraftfahrzeug mit einem Wischersystem (1) nach einem der Ansprüche 3 bis 6.

## Claims

1. An adapter (29) for a connection device (7) designed to connect a wiper blade (3) to a drive arm (5) in a wiper system (1) for a motor vehicle, comprising a first side wall (43) and a second side wall (45) spaced apart from each other and connected to each other by a top wall (46), the first side wall (43) and the second side wall (45) comprising respectively a first orifice (47) and a second orifice (49) that are designed to receive a pin (23) projecting from the drive arm (5) in a transverse direction (Oy), the second side wall (45) comprising at least one fastening means (57) for fastening the pin (23) in the second orifice (49) designed to rigidly connect the adapter (29) to the drive arm (5) at least in the transverse direction (Oy), **characterized in that** at least one fastening means (57) is a resilient clamping ring (70) made in material of the second side wall (45), said resilient clamping ring (70) being at least partially incorporated into an outer face (452) of the second side wall (45).

2. A connection device (7) designed to connect a wiper blade (3) to a drive arm (5) in a wiper system (1) for a motor vehicle, the connection device (7) comprising at least one connector (27) designed to be rigidly connected to the wiper blade (3) and including at least one transverse hole (41) designed to receive the pin (23), and an adapter (29) as claimed in the preceding claim that is mounted pivotingly about a rotation axis (400) on the connector (27) to link the connector (27) to the drive arm.

3. A wiper system (1) for a motor vehicle comprising a wiper blade (3), a drive arm (5) and a connection device (7) as claimed in the preceding claim, the drive arm (5) having at least one pin (23) and one lug (25), both of which project from an end portion (21) of the drive arm (5) in a transverse direction (Oy).

4. The wiper system (1) as claimed in the preceding claim, in which the end portion (21) of the drive arm (5) has at least a first flank (15) and a second flank (17), at least the second flank (17) carrying the pin (23) and the second flank (17) bearing at least partially against an outer face (432) of the first side wall (43) of the adapter (29).

5. The wiper system (1) as claimed in one of claims 3 or 4, in which the lug (25) includes at least one end stop flange (53) for the adapter (29) arranged opposite the second side wall (45) of the adapter (29).

6. The wiper system (1) as claimed in the preceding claim, in which the lug (25) is defined by a transverse dimension (50), measured between the second flank (17) and an inner surface (55) of the end flange (53), the transverse dimension (50) being strictly greater than a corresponding transverse dimension (290) of the adapter (29) measured between the outer face (432) of the first side wall (43) and the outer face (452) of the second side wall (45), the inner surface (55) of the end flange (53) being arranged at a non-zero distance from the outer face (452) of the second side wall (45) of the adapter (29).

7. A motor vehicle having a wiper system (1) as claimed in any one of claims 3 to 6.
